# EUROPEAN PATENT APPLICATION

(11) **EP 0 954 126 A1**
(43) Date of publication of application: **03.11.1999**
(21) Application number: 98303295.4
(22) Date of filing: 28.04.1998
(51) Int. Cl.: H04B 10/18, H04L 25/03

(54) **Optical dispersion compensation**

(71) Applicant: LUCENT TECHNOLOGIES INC., Murray Hill, New Jersey 07974-0636 (US)
(72) Inventor: Möller, Lothar Benedict, Nuremberg 90491 (DE); Schmauss, Bernhard, Theisseil 92637 (DE)
(74) Representative: Funnell, Samantha Jane

(57) **Abstract**

The present invention relates generally to the field of optical communication and particularly to optical communication techniques which compensate for dispersion such as that in optical fibres.

Known methods for the compensation of optical dispersion in wavelength division multiplex systems have the disadvantage of associating an optical dispersion compensation with each used wavelength channel, which causes high costs for the individual compensation of each wavelength channel.

The present invention allows more cost effective compensation of optical dispersion by optically compensating an optical signal, converting the optical signal to an electrical signal, and electrically compensating said electrical signal.

It is an advantage of the present invention, that it allows to use only one optical dispersion compensation for compensating for optical dispersion of all channels or wavelengths used in the wavelength decision system.

## Description

### TECHNICAL FIELD

The present invention relates generally to the field of optical communication and particularly to optical communication techniques which compensate for dispersion such as that in optical fibres.

### BACKGROUND OF THE INVENTION

Optical communication systems using optical fibres to couple a light source, such as laser, and a photodetector are now widely used for high speed (for example, Gbit/sec data rates) and long distance (for example, trans-Atlantic or trans-Pacific) communications. Many technical problems have had to be overcome for these systems to reach their present state of development. Perhaps the most widely known problem was caused by the lossy nature of the first silica based optical fibres. The loss in such fibres was greatly reduced, to the order of a tenth of a dB/km or even less, by the development of fibres fabrications techniques that greatly reduced the presence of loss creating impurities in the fibres.

After low loss optical fibres had been developed, other system parameters became important to the further development of optical communications systems. For example, fibres have chromatic dispersion; that is, the propagation velocity of the radiation depends upon its frequency. Narrow band light sources in the form of solid state lasers were developed. These lasers typically radiated in several relatively closely spaced modes which propagated at different velocities. The presence of multiple modes and the existence of chromatic dispersion, limited either the data transmission rate or the transmission distance. Radiation sources, such as distributed feedback (DFB) lasers, that emitted only a single mode were developed, to overcome these problems.

However, even the single mode modulated light of a DFB-laser has a finite bandwidth which causes a pulse to spread when chromatic dispersion is present. One approach to solving this problem developed dispersion shifted fibres, which are often referred to by the acronym DSF. Dispersion shifted fibres have a region of very low or no chromatic dispersion in the transmission band. However, the use of such fibres suffers from several drawbacks. Firstly, the laser must be selected to emit at the frequency at which the fibre has no chromatic dispersion. Secondly, much non-dispersion shifted fibre has already been installed.

Other techniques that compensate for fibre chromatic dispersion are desirable if they overcome the previously discussed limitations imposed by non-dispersion shifted fibres. One technique inserts dispersion compensating fibre or fibres (DCF) in the transmission path between the transmitter and the receiver. The length of fibres is selected to provide dispersion compensation for a certain transmission length at a given wavelength and therefore enables transmission over either an extended distance or at a higher data rate.

If DCF is used to compensate for optical dispersion another problem arises when different wavelengths are used at the same time for transmission, being commonly referred to as Wavelength Division Multiplexing (WDM). WDM is being introduced as a means of increasing the capacity of optical fibre transmission systems. In a WDM system each individual fibre carries a number of optical signals having different wavelengths. Therefore the compensation for optical dispersion has not only to be accomplished for one wavelength but for all wavelengths used in the WDM system.

The optical dispersion of usually used Single Mode Fibres (SMF) and DCF however is different and in addition depends on the wavelength. The optical dispersion for SMF at a wavelength of 1550 nm typically is 17 ps/(nm km), whereas it is -100 ps/(nm km) for DCF. The wavelength dependency of the optical dispersion can be figured by a straight line having a certain slope. The slope for SMF is 0.06 ps/(nm² km), whereas it is -0.2 ps/(nm² km) for DCF. Therefore a compensation with one DCF is only possible for one specific wavelength. As each channel used has a finite bandwidth, as explained above, the use of DCF does not allow for complete compensation of dispersion which may cause pulse spreading of pulses within one channel or wavelength.

From the article "Transoceanic twelve 10 Gbit/s WDM signal transmission experiment with individual channel dispersion-and-gain compensation and prechirped RZ pulse format", by M. Murakami et al, it is known to split the optical transmission signal into the different channels or wavelengths used in the system to individually compensate for the optical dispersion with a DCF for each wavelength used in the system. In this way compensation of optical dispersion is possible for each wavelength as the length of the individual DCFs can be adjusted.

The known compensation for optical dispersion has the disadvantage of associating a DCF with each used wavelength channel, which causes high costs for the individual compensation of each wavelength channel. In addition it has the disadvantage that DCF usually only is available in modules with fixed length. This causes problems to get the DCFs in the specific lengths needed for the individual wavelength channels. A further disadvantage is the inflexibility of the known compensation because the DCFs used have to be customised for each optical transmission system.

### SUMMARY OF THE INVENTION

Accordingly, it is an object of the present invention to provide a method to compensate for optical dispersion in optical communication. It is the aim of the inventive method under consideration to avoid the drawbacks known from the state of the art.

The object is achieved by providing a method for compensating for optical dispersion of an optical signal passing through an optical communication system comprising the steps of optically compensating said optical signal, converting the optical signal to an electrical signal, and electrically compensating said electrical signal.

It is an other object of the present invention to provide an apparatus to compensate for optical dispersion in optical communication. It is the aim of the inventive system under consideration to avoid the drawbacks known from the state of the art.

The object is achieved by providing an apparatus to compensate for optical dispersion of an optical signal passing through an optical communication system comprising at least one means for optical compensation, a means for converting the optical signal to an electrical signal, and a means for compensating said electrical signal.

An advantage of the present invention is that it allows the use of only one DCF for compensating for optical dispersion for all channels or wavelengths used in a WDM system. Another advantage of the present invention is that it allows the use of available DCF modules with fixed lengths, as the remaining optical dispersion is compensated for with electrical compensating means.

The present invention will become more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

### BRIEF DESCRIPTION OF THE DRAWINGS

The following detailed description is accompanied by drawings of which
- Fig. 1: is an optical communication system according to this invention, and
- Fig. 2: is an optical receiver according to this invention as used in the optical communication system shown in Fig. 1.

Identical denotations in different Figures represent identical elements. Bold lines coupling depicted elements represent optical couplings, thin lines coupling depicted elements represent electrical couplings.

### DETAILED DESCRIPTION

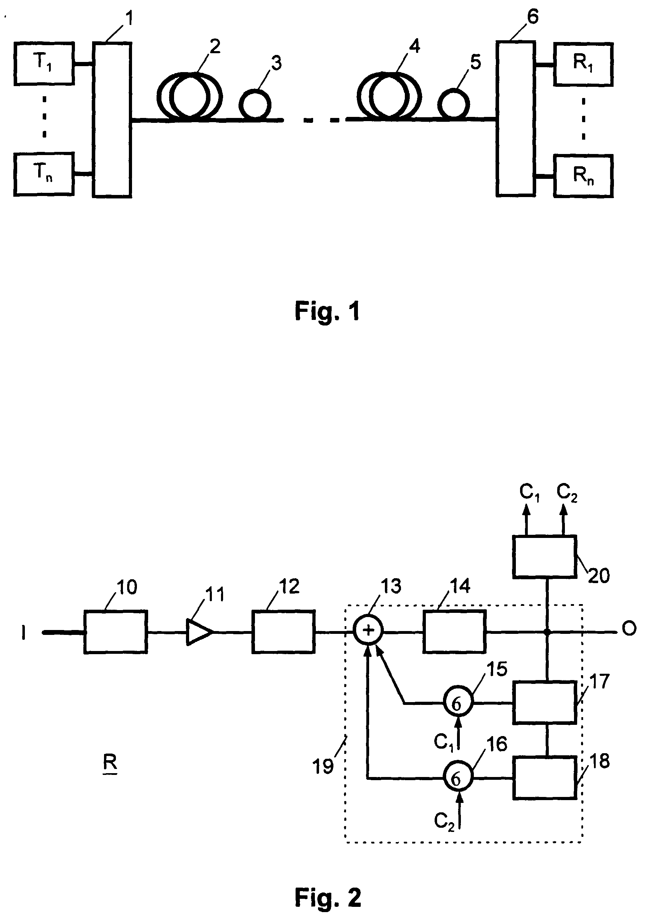

Depicted in Fig. 1 is an optical communication system, having a plurality of optical signals, forming a Wavelength Division Multiplex system (WDM). The WDM system has a plurality of optical transmitters T₁ ... Tₙ, a wavelength division multiplexer 1, a transmission path being formed of Single Mode Fibres (SMF) 2, 4 and Dispersion Compensating Fibres (DCF) 3, 5, a wavelength division demultiplexer 6 and a plurality of optical receivers R₁ ... Rₙ. The optical signals are generated by the optical transmitters T₁ ... Tₙ and are combined by the wavelength division multiplexer 1 to form a transmission signal. The transmission signal is sent over the transmission path, which is formed of SMFs 2, 4 and DCFs 3, 5 as described above. The length of the DCFs 3, 5 is chosen to compensate for the accumulated optical dispersion of the SMFs 2, 4 for one of the channels or wavelengths used. The transmission path may be composed in a way differing from Fig. 1, especially a differing number of SMFs and/or DCFs may be present. In addition optical amplifiers for amplifying the transmission signal may be present, e. g. after each SMF and/or DCF. The wavelength division demultiplexer 6 separates the different channels or wavelengths and couples the optical signals of the different channels or wavelengths to the optical receivers R₁ ... Rₙ. The optical receivers R₁ ... Rₙ convert the optical signals to electrical signals for further processing, especially an electrical compensation of the signal deterioration caused by the optical dispersion which could not be completely compensated by the DCFs 3, 5 as explained above in the opening portion.

Depicted in Fig. 2, in greater detail, is an optical receiver R as used in the optical communication system as shown in Fig. 1. The optical receiver R has an optoelectrical converter 10, e. g. a photo-diode, an amplifier 11, a first means 12 for sampling, a decision feedback loop 19, being formed by an adder 13, a threshold detector 14, two multipliers 15, 16 and two delays 17, 18. In addition the optical receiver R has a second means 20 for determining coefficients C₁ and C₂ which are used with the multipliers 15, 16.

The optical signal of an individual output of the wavelength division demultiplexer 6 is coupled to an input I of the optical receiver R and fed into the optoelectrical converter 10 which converts the optical signal to an electrical signal. The amplifier 11 amplifies the electrical signal. The electrical signal is then coupled to the first means for sampling 12, to form a binary signal which is coupled to the decision feedback loop 19. The threshold detector 14 of the decision feedback loop 19 decides which of the two possible binary signals - high or low - is present. The decided signal forms the output signal of the decision feedback loop 19 at an output O. The decided signal is also coupled to delay 17. The output of delay 17 is coupled to delay 18. The delayed signals of delays 17 and 18 are coupled to the multipliers 15 and 16 respectively and are weighted with the coefficients C₁ and C₂ respectively. The outputs of the multipliers 15 and 16 are coupled to the adder 13 which adds the weighted signals to the binary signal coming from the sampling means 12, in order to complete the loop of the decision feedback loop 19.

The coefficients C₁ and C₂ are determined by the second means 20 in order to minimise the deterioration of the transmission signal caused by the optical dispersion which could not be completely compensated by the DCFs 3, 5 as explained above. For this purpose the second means 20 is calculating, e. g. the Bit Error Rate (BER) of the signal at the output O. The BER is a good indicator for the determination of the coefficients C₁ and C₂. The opening of the eye diagram of the signal also can be used as an indicator for determining the coefficients C₁ and C₂.

The use of a decision feedback loop to compensate for both linear and nonlinear distortions of optical signals is known. For greater detail it is referred to the article 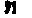 Electrical Dispersion Compensation for 10 Gbit/s Transmission Systems: Simulation Results", by S. Otte and W. Rosenkranz, 2^{nd} Working Conference on Optical Network Design and Modelling, Rome, 1998. It is also referred to the article 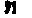 Electrical Signal Processing Techniques in Long-Haul Fiber-Optic Systems", by J.H. Winters and R.D. Gitlin, IEEE TRANSACTIONS ON COMMUNICATIONS, VOL. 38, NO. 9, September 1990, pages 1439-1453, which shows further electrical processing techniques for the compensation of linear and nonlinear distortions of optical signals.

If an optical receiver R, as described above with reference to Fig. 2, is used in an optical communication system, as described above with reference to Fig. 1, for all used optical receivers R₁ to Rₙ, the different accumulated dispersions for the different optical signals modulated to different wavelength present after the optical compensation of the dispersion all can individually be compensated for. As the optical receiver R automatically adjusts the electrical compensation to match the individual accumulated dispersion by calculating the coefficients C₁ and C₂, all optical receivers R₁ to Rₙ can be constructed in the same way and no manual adjustment for the compensation of the accumulated dispersion is necessary.

For simplicity reason only the parts of the optical receiver R relevant for this invention are shown in Fig. 2. The decision feedback loop 19 and the means 20 for determining the coefficients C₁ and C₂ may be integrated to the clock and data recovery unit of the optical receiver.

For nonlinear propagation it can be of advantage if the accumulated dispersion is not compensated for completely. Problems with the channel power may occur if the number of channels or wavelengths used in the WDM system is changed, e. g. when a channel fails, is added to or dropped from the transmission signal, as the power of each channel then can not always be adjusted to it's nominal power. In case of increased channel power residual dispersion is of advantage, because the interaction of nonlinear effects and dispersion is minimised. In case of decreased channel power residual dispersion has to be suppressed as the propagation is now in the linear regime. The adjustment of residual dispersion can be achieved by electrical dispersion compensation. The optical power of the individual channels can be used for determining the coefficients C₁ and C₂ used by the decision feedback loop 19.

The compensation of dispersion as described above is not only suitable for WDM systems but also for systems having only one channel or wavelength, because each channel has a finite bandwidth which causes a pulse to spread when chromatic dispersion is present, as described above.

The compensation of dispersion as described above is not only suitable for compensation of chromatic dispersion as mentioned. It is also suitable for compensating polarisation mode dispersion.

The compensation of dispersion as described above is especially suitable for optical communication systems using intensity modulated digital optical signals.

## Claims

1. Method of compensating for optical dispersion of an optical signal passing through an optical communication system comprising the steps of
- optically compensating said optical signal,
- converting the optical signal to an electrical signal, and
- electrically compensating said electrical signal.

2. Method according to claim 1,
**characterised in that**
at said step of electrically compensating said electrical signal the dispersion is compensated completely.

3. Method according to claim 1,
**characterised in that**
at said step of electrically compensating said electrical signal the dispersion is compensated incompletely to leave a residual dispersion.

4. Method according to one of the claims 1 to 3,
**characterised in that**
said step of electrically compensating said electrical signal is effected by a decision feedback loop.

5. Method according to one of the claims 1 to 4,
**characterised in that**
a bit error rate of said electrical signal is used to determine said electrical compensation.

6. Method according to one of the claims 1 to 5,
**characterised in that**
the step of optically compensating the optical signal is effected with at least one dispersion compensating fibre.

7. Apparatus to compensate for optical dispersion of an optical signal passing through an optical communication system comprising
- at least one means (3,5) for optical compensation,
- a means (10,11,12) for converting the optical signal to an electrical signal, and
- a means (19) for compensating said electrical signal.

8. Apparatus according to claim 7,
**characterised in that**
said means (10,11,12) for converting the optical signal to said electrical signal has a photo detector (10), an amplifier (11) and a sampling means (12).

9. Apparatus according to claim 7 or 8,
**characterised in that**
said means (19) for compensating said electrical signal is formed by a decision feedback loop.

10. Apparatus according to claim 9,
**characterised in that**
an analysing means (20) analyses the bit error rate of said electrical signal to determine coefficients (C₁,C₂) for said decision feedback loop (19).

11. Apparatus according to one of the claims 7 to 10,
**characterised in that**
said at least one means (3,5) for optical compensation is formed by a dispersion compensating fibre.

12. Apparatus according to one of the claims 7 to 11,
**characterised in that**
the communication system is a wavelength division multiplex system.
